# EUROPEAN PATENT APPLICATION

(11) **EP 4 815 368 A1**
(43) Date of publication of application: **30.09.2026**
(21) Application number: 26160380.7
(22) Date of filing: 24.02.2026
(51) Int. Cl.: H04L 9/40, G06F 5/06

(54) **PARALLEL IPSEC PROCESSING USING PROCESSOR CORES AND QUEUING LOGIC**

(30) Priority: 24.03.2025 US 202519088955
(71) Applicant: Microsoft Technology Licensing, LLC, Redmond, WA 98052 (US)
(72) Inventor: Thangapandi, Shivakumar, Redmond, WA, 98052 (US)
(74) Representative: Grünecker Patent- und Rechtsanwälte PartG mbB

(57) **Abstract**

A computerized method processes network packets in parallel. Packets are obtained from network traffic of a network tunnel. The packets are distributed between two input queues, wherein each input queue is associated with a dedicated packet processing branch that can operate in parallel with other packet processing branches. Packets from the input queues are processed using dedicated packet processors (e.g., dedicated CPU core(s) and/or other dedicated processing entities) and the resulting processed packets are added to associated output queues. Packet order information is used to maintain the proper packet order across the multiple packet processing branches such that, when the processed packets from the multiple output queues are combined into a single processed packet flow or stream, the packets are in the same order as when they entered the network tunnel. After the processed packets are combined, they proceed along the network tunnel.

## Description

### BACKGROUND

The implementation of secure communication over public networks is increasingly vital as reliance on cloud-based services continues to grow. Virtual private networks (VPNs) in cloud environments offer a mechanism to secure data transmission by employing secure tunneling protocols like internet protocol security (IPsec), which encrypt data between endpoints. However, the processing overhead introduced by the encryption and decryption processes can pose limitations to throughput, particularly as data rates and the number of connected devices increase. Moreover, the conventional use of limited CPU resources and single network interface controllers (NICs) often leads to inefficiencies, such as bottlenecks, which restrict the ability to handle multiple concurrent secure connections effectively.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A computerized method for processing network packets in parallel is described. Packets are obtained from network traffic of a network tunnel. The packets are distributed between two input queues, wherein each input queue is associated with a dedicated packet processing branch that can operate in parallel with other packet processing branches. Packets from the input queues are processed using dedicated packet processors (e.g., dedicated CPU core(s) and/or other dedicated processing entities) and the resulting processed packets are added to associated output queues. Packet order information (e.g., enqueue position indicators of the output queues as described herein) is used to maintain the proper packet order across the multiple packet processing branches such that, when the processed packets from the multiple output queues are combined into a single processed packet flow or stream, the packets are in the same order as when they entered the network tunnel. After the processed packets are combined, they proceed along the network tunnel.

### BRIEF DESCRIPTION OF THE DRAWINGS

The present description will be better understood from the following detailed description read considering the accompanying drawings, wherein:
FIG. 1 is a block diagram illustrating a system configured for performing parallel packet processing on network tunnel traffic;
FIG. 2 is a flowchart illustrating an example method for processing network traffic packets in parallel;
FIG. 3 is a flowchart illustrating an example method for a group of worker threads to manage the processing of packets;
FIG. 4 is a block diagram illustrating a system 400 for decrypting packets in a first network traffic tunnel and encrypting packets in a second network traffic tunnel; and
FIG. 5 illustrates an example computing apparatus as a functional block diagram.

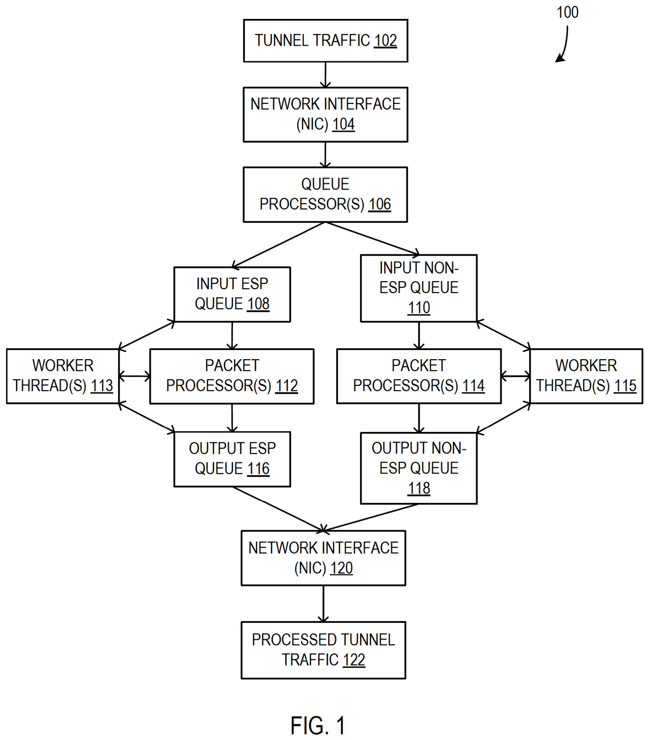

Corresponding reference characters indicate corresponding parts throughout the drawings. In FIGs. 1 to 5, the systems are illustrated as schematic drawings. The drawings may not be to scale. Any of the figures may be combined into a single example or embodiment.

### DETAILED DESCRIPTION

In existing systems, virtual private network (VPN) gateways receive the entire traffic from the on-premises gateway as a single flow. A flow is determined based on certain fields in the internet protocol (IP) and transport layer headers. Receive side scaling (RSS) allows a network interface controller (NIC) and other associated drivers to distribute the received packets to various cores based on the flow information. Since the IP and transport layer flow information for all IP security (IPsec) traffic between two gateways are the same, RSS directs all traffic from a single IPsec tunnel to the same core. As a result, the throughput of a single IPsec tunnel is restricted based on the processing power/capacity of a single CPU core. In some such examples, the maximum throughput that can be achieved with a single flow is around 7 Gbps for a max packet size of 1500 bytes. As such, with existing systems, it is not possible to achieve 10 Gbps aggregate throughput with two tunnels if RSS results in directing both tunnels' traffic to the same CPU core.

Further, in existing systems, a guaranteed performance level cannot be achieved if the packet processing cores are shared for multiple purposes. Additionally, with RSS, the network interface controller (NIC) distributes the received packets to various cores based on the flow information, but it is not possible to selectively change the CPU core of a specific flow in case two heavy flows land on the same core.

In contrast, aspects of the disclosure provide systems and methods for processing network packets from a single flow in parallel using a plurality of dedicated processing entities. These systems and methods maintain packet order using queue data structures associated with each dedicated processing entity, such that the order of packets is maintained despite the packets being processed in parallel. Packets are obtained from network traffic and distributed between two input queues, wherein each input queue is associated with a dedicated packet processing branch that can operate in parallel with other packet processing branches. Queued packets are processed using packet processors (e.g., dedicated central processing unit (CPU) core(s) and/or other processing entities) and the resulting processed packets are added to associated output queues. Packet order information is used to maintain the proper packet order across the multiple packet processing branches. After the processed packets are combined, they proceed along the network tunnel.

The disclosure operates in an unconventional manner at least by distributing and processing network packets across multiple parallel packet processors to enable a greater throughput of network traffic at bottleneck processing points. This is directed to a particular improvement in performing important packet processing operations that limit the bandwidth of network tunnels, such as encryption and decryption operations. Specifically, the method distributes the packet processing tasks across multiple dedicated CPU cores (e.g., CPU cores that are only used for the packet processing tasks and that cannot be repurposed to other tasks after system boot) to be performed in parallel while using packet queues to maintain the proper packet order, which increases the potential bandwidth associated with the packet processing and avoids the associated parallel processing pitfall of disordered packets. This provides a specific improvement over prior systems, resulting in improved overall bandwidth in network tunnels that require packet processing such as encryption or decryption. The described processes are integrated into a practical application.

Aspects of the disclosure provide CPU core management and network interface controller (NIC) distribution to improve throughput and efficiency. The disclosed system presents advanced techniques for overcoming internet protocol security (IPsec) throughput limitations on virtual private network (VPN) gateways by leveraging strategies involving CPU core isolation and dual NIC support. These techniques collectively enhance packet processing capabilities, minimize inter-core conflicts, and ensure efficient handling of traffic across IPsec tunnels, thereby delivering improved overall network performance.

Further, the system employs a series of technical solutions to address the technical problems. First, core isolation strategies are used to assign specific CPU cores to encryption, decryption, and other management functions, thus reducing cross-core interference and optimizing resource allocation. In some such examples, the CPU cores are isolated at boot time and are thus guaranteed to be used by dedicated processes or threads (e.g., the set of CPU cores is reserved for and dedicated to encryption, decryption, and RSS processes). Second, the introduction of dual NIC support (e.g., a second NIC is added to the system and CPU cores are exclusively assigned to each NIC) allows the distribution of IPsec tunnel traffic across separate NICs and cores using RSS mechanisms. This dual NIC configuration mitigates bottlenecks and facilitates enhanced throughput by ensuring that traffic is not constrained to a single IPsec tunnel. The system also employs a multi-core packet processing strategy where packets are parallel processed across multiple cores, with dedicated input and output queues to manage packet sequencing and flow effectively.

In a further embodiment, the system distributes packets across multiple cores for both ingress and egress traffic, establishing dedicated queues that ensure in-order packet delivery. This multi-core packet processing strategy may be designed to enhance throughput by leveraging parallel processing capabilities, thus preserving packet sequencing, and minimizing potential replay attacks, which can occur due to out-of-order delivery.

In some examples, VPN drivers in the described systems use bcrypt libraries (for securely hashing passwords) for the IPsec cryptographic processing. With an Advanced Encryption Standard with Galois/Counter Mode (AES-GCM) cryptographic algorithm and a tunnel maximum transmission unit (MTU) of 1400 bytes, the example system can achieve a maximum throughput of 2.5Gbps. This number is not consistent and can vary based on the load on that CPU core. Since the cores are shared, heavy usage by RSS, system updates, security systems, or the like can significantly affect the performance of the tunnel, both in terms of throughput and latency.

Further, in some examples, aspects of the disclosure include the use of virtual machines (VMs) for implementation and/or management of the described network traffic tunnels (e.g., a VPN gateway instance implemented on a 16-core (or other quantity of cores) VM).

It should be understood that, while many examples herein describe the use of CPUs in performing packet processing tasks or operations, in other examples, other types of processing entities are used without departing from the description. For instance, in other examples, packet processing tasks are performed by Systems-on-a-Chip (SOCs), Field Programmable Gate Arrays (FPGAs), or other types of processing entities.

FIG. 1 is a block diagram illustrating an example system 100 configured for performing parallel packet processing on network tunnel traffic 102. In some examples, the tunnel traffic 102 is routed to the network interface 104 (a network interface controller (NIC)) which then routes the tunnel traffic to queue processor(s) 106. Packets of the tunnel traffic 102 are divided between two input queues, the input Encapsulating Security Payload (ESP) queue 108 and the input non-ESP queue 110. Packet processors 112 and 114 are configured to perform packet processing operations on the packets in the input queues 108 and 110. In some examples, the packet processor(s) 112 and 114 are configured to perform encryption operations (e.g., packet processor(s) 114 perform encryption operations on packets from the input non-ESP queue 110) and/or decryption operations (e.g., packet processor(s) 112 perform decryption operations on packets from the input ESP queue 108) on the data in the packets of the input queues 108 and 110, but in other examples, other packet processing operations are performed without departing from the description.

During operation of the packet processor(s) 112 and 114, packets are obtained from the associated input queues 108 and 110 for processing. After the processing of the packets is complete, the processed packets are placed in the associated output queues, the output ESP queue 116 and the output non-ESP queue 118. Processed packets can then be routed to the network interface 120 and combined into processed tunnel traffic 122. Thus, the processing of the packets of tunnel traffic 102 into the packets of the processed tunnel traffic 122 is performed in parallel using the input queues 108-110, the packet processors 112-114, and the output queues 116-118. Additionally, it should be understood that, in some examples, the network interface 104 and the network interface 120 are the same device (e.g., the network interfaces 104 and 120 are the same NIC) while, in other examples, the network interfaces 104 and 120 are different devices or entities without departing from the description.

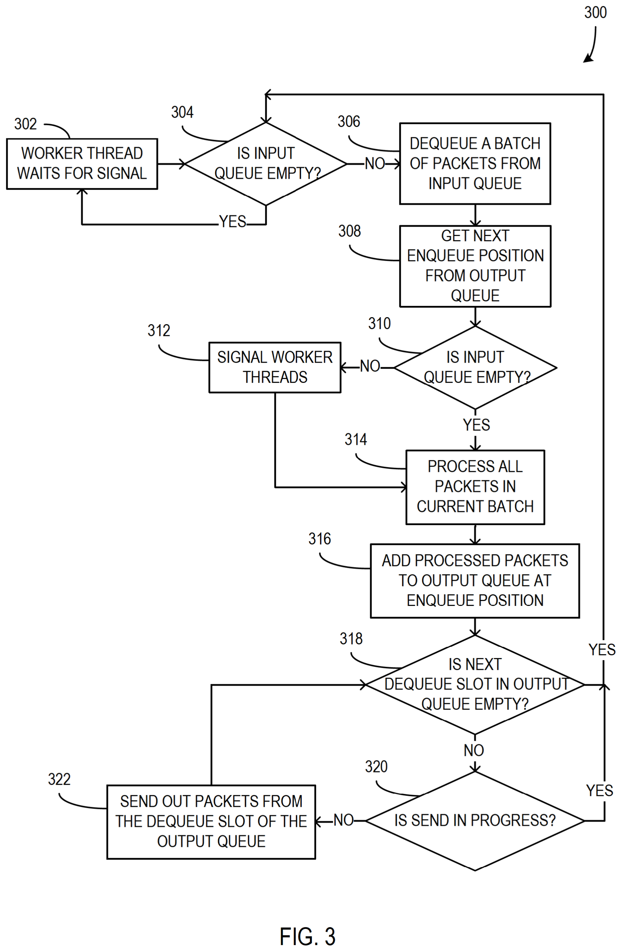

Further, in some examples, the system 100 includes worker threads 113 and 115 that are each associated with one "side" of the system. As illustrated, the worker thread(s) 113 are associated with the input queue 108, the packet processor(s) 112, and the output queue 116 while the worker thread(s) 115 are associated with the input queue 110, the packet processor(s) 114, and the output queue 118. The worker threads 113 and 115 include software configured to manage the execution of operations that control the associated queues and packet processors. For instance, in an example, a worker thread 113 gets packets from the input queue 108 and causes those packets to be processed using the packet processors 112. Additionally, or alternatively, the worker thread 113 takes processed packets from the packet processor(s) 112 and adds them to the output queue 116 and/or takes packets from the output queue 116 and causes them to be sent to the network interface 120. In some examples, there are a plurality of worker threads associated with each side of the system 100, such that a worker thread 113 can interact with the input queue 108 while another worker thread interacts with the output queue 116 at the same time. Example behavior of worker threads 113 and 115 is described further with respect to at least FIG. 3.

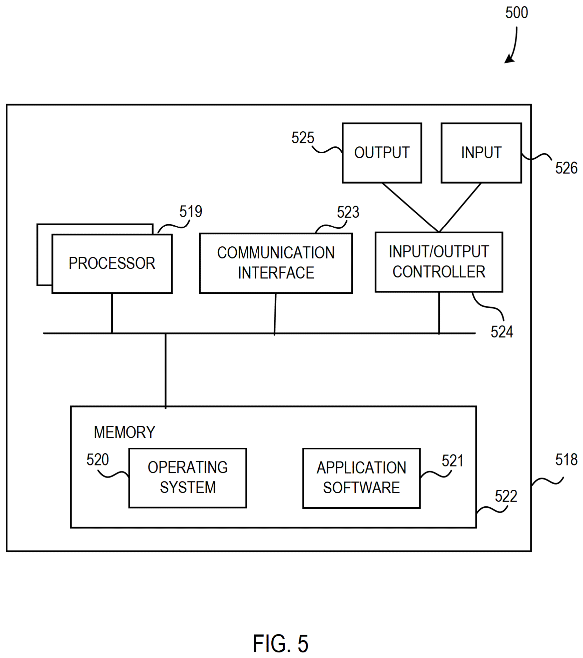

Further, in some examples, the system 100 includes one or more computing devices (e.g., the computing apparatus of FIG. 5) that are configured to communicate with each other via one or more communication networks (e.g., an intranet, the Internet, a cellular network, other wireless network, other wired network, or the like). In some examples, entities of the system 100 are configured to be distributed between the multiple computing devices and to communicate with each other via network connections. For example, the packet processor(s) 112 are executed and/or installed in a first computing device and the packet processor(s) 114 are executed and/or installed in a second computing device within the system 100. The first computing device and second computing device are configured to communicate with each other via network connections. Alternatively, in some examples, other components of the system 100 (e.g., input queue 108 and output queue 116) are executed on separate computing devices and those separate computing devices are configured to communicate with each other via network connections during the operation of the system 100. In other examples, other organizations of computing devices are used to implement system 100 without departing from the description.

In some examples, the system 100 includes a VPN gateway that provides Internet Protocol Security (IPsec) based connectivity for securely connecting on-premises networks to virtual networks. The connection can be made over the internet or over an Express Route circuit. Other VPN gateways are designed to provide a single IPsec connection (e.g., with a throughput of 2.5 Gbps). The system 100 enables this design to be improved and provides a consistently improved throughput (e.g., at least 5Gbps) for a single connection and an aggregate greater improved throughput (e.g., at least 10 Gbps) for two connections by performing IPsec processing in parallel.

Further, in some examples, the IPsec component is implemented as a Network Driver Interface Specification (NDIS) Lightweight Filter (LWF) driver. The system 100 uses Receive Side Scaling (RSS) for distributing the packets across different CPU cores (e.g., the packet processors 112 and 114). After RSS distribution, each packet is added to an input queue 108-110 based on the corresponding IPsec tunnel. Every queue is associated with a CPU core (e.g., the input queue 108 is associated with packet processor 112) and a worker thread on each core dequeues the corresponding queue's packets for IPsec processing. Once the packets are processed, they are sent out from the same CPU core.

Additionally, or alternatively, in some examples, the system 100 includes multiple tunnels (e.g., the illustrated portion of system 100 is a single tunnel) and is associated with a group of processor cores or processors instead of a single processor core or single processor. The multiple tunnels are divided into separate groups for encryption and decryption. In each tunnel, there are two queues for each group of cores. The first queue is the input queue (e.g., input queues 108-110) where the packets are added for later processing based on the tunnel and the direction (ingress vs egress). In some examples, the input queue is a linear list where packets are added to the tail and removed from the head of the list. The second queue is the output queue (e.g., output queues 116-118) that is used to maintain the original packet order. In some examples, the output queue is a circular list where a batch of packets are added to the tail of the queue and removed from the head of the queue.

It should be understood that, while many examples herein describe one or two tunnels that include input queues, processors, and output queues, in other examples, more and/or different arrangements of tunnels with the described features are used without departing from the description. For instance, in an example, a system is configured to include three separate tunnels, each configured to perform a type of packet processing and each including multiple processors and/or processor cores with associated, dedicated input queues and output queues.

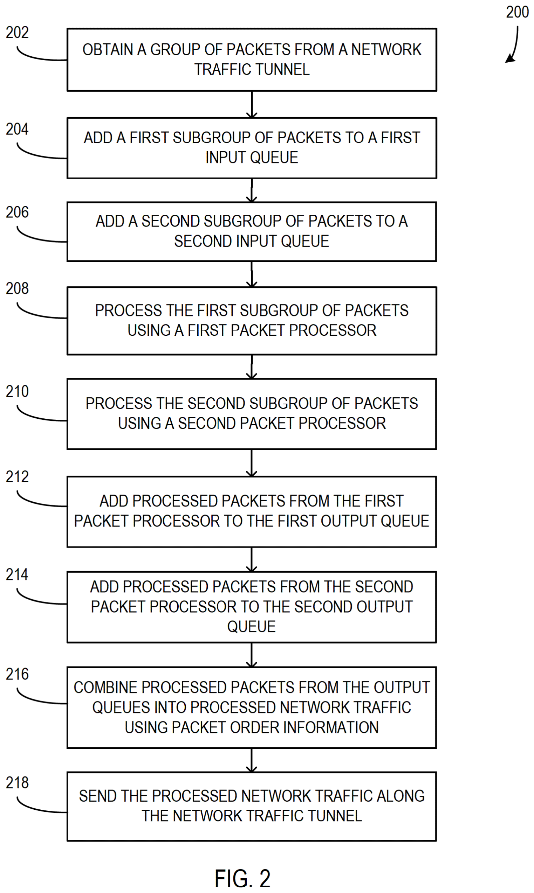

FIG. 2 is a flowchart illustrating an example method 200 for processing network traffic packets in parallel. In some examples, the method 200 is executed or otherwise performed in a system such as system 100 of FIG. 1.

At 202, a group of packets is obtained from a network traffic tunnel. In some examples, the group of packets is obtained as the packets arrive via the network traffic tunnel, such that the packets are processed as they arrive.

At 204, a first subgroup of the packets is added to a first input queue and, at 206, a second subgroup of the packets is added to a second input queue. In some examples, the first input queue and the second input queue are each part of a separate branch of the packet processing apparatus, wherein each branch is configured to process packets independently and/or in parallel (e.g., the branch of the input queue 108 and the branch of the input queue 110 of FIG. 1). Further, in some examples, the adding of the subgroups of packets to the input queues is performed based on RSS techniques as described herein.

At 208, the first subgroup of packets is processed using a first packet processor and, at 210, the second subgroup of packets is processed using a second packet processor. In some examples, the processing operations performed by the first packet processor and the second packet processor are performed during substantially the same time period.

At 212, processed packets from the first packet processor are added to the first output queue and, at 214, processed packets from the second packet processor are added to the second output queue. In some examples, adding packets to the output queues includes using packet order information to add the packets to the output queues in a way that enables the order of the packets to be maintained in situations where the packets are processed out of order due to the multiple branches of packet processing.

At 216, the processed packets from the output queues are combined into processed network traffic using the packet order information and, at 218, the processed network traffic is sent along the network traffic tunnel.

In some examples, the packet processors are cryptographic processors (e.g., a processing entity that performs cryptographic operations such as encryption or decryption) and/or the processing performed on the packets includes at least one of data encryption or data decryption. For instance, in some examples herein, ESP packets are decrypted, and non-ESP packets are encrypted. Alternatively, in other examples, other types of data processing are performed on the packets without departing from the description.

Further, in some examples, the method 200 is performed using a plurality of worker threads that are configured to manage the input queues, the output queues, and the packet processors. The plurality of worker threads are further configured to communicate with each other and to perform operations in parallel with each other as described herein.

Additionally, or alternatively, in some examples, the input queues and output queues are comprised of data structures such as lists. For instance, in an example, the input queues are comprised of first in first out (FIFO) lists and the output queues are comprised of circular lists, wherein, when packets are removed from the input queues to be processed, the packets that have been in the input queues the longest are the first that are removed. Alternatively, when packets are added to or removed from the output queues, they are added and/or removed at enqueue and dequeue positions of the circular lists as described herein. In other examples, the input queues and output queues include other types of data structures without departing from the description.

In some examples, the method 200 is performed in a system in which the network traffic tunnel includes a dedicated NIC for handling packet traffic and a plurality of dedicated CPU cores and/or CPUs for performing the processing operations on the packets (e.g., CPU cores that are dedicated to only performing encryption operations and/or decryption operations).

FIG. 3 is a flowchart illustrating an example method 300 for a group of worker threads to manage the processing of packets. In some examples, the method 300 is executed or otherwise performed in a system such as system 100 of FIG. 1. Additionally, or alternatively, in some examples, the method 300 is performed as part of a method such as method 200 of FIG. 2.

At 302, worker threads are configured to wait to be signaled. Once a worker thread receives a signal, it proceeds to 304, where it determines whether the input queue is empty. If the input queue is empty, the thread returns to waiting for signals at 302. Alternatively, if the input queue is not empty, the worker thread proceeds to 306, where it dequeues a batch of packets from the input queue.

At 308, a next enqueue position indicator is obtained from the associated output queue. In some examples, this next enqueue position indicator is used as packet order information as described herein. Then, at 310, the worker thread determines whether the input queue is now empty after the batch of packets has been dequeued. If the input queue is still not empty, the process proceeds to 312 to signal additional worker threads and then proceeds to 314. Alternatively, if the input queue is now empty, the worker thread proceeds directly to 314.

At 314, the worker thread causes the packets in the obtained batch to be processed using the processor(s) with which the input queue is associated. After the processing, at 316, the processed packets are added to the output queue in a position based on the previously obtained enqueue position indicator.

At 318, the worker thread determines whether the next dequeue slot or position in the output queue is empty. If the next dequeue position is not empty, the worker thread determines whether a send operation is currently in progress at 320. Alternatively, if the next dequeue position is empty, the worker thread returns to 304.

At 320, if a send operation is not in progress, the worker thread sends out a batch of packets from the dequeue position of the output queue at 322 and then returns to 318. In some examples, the worker thread sets a flag that a send operation is currently in progress to notify other worker threads. Alternatively, if a send operation is in progress, the worker thread returns to 304.

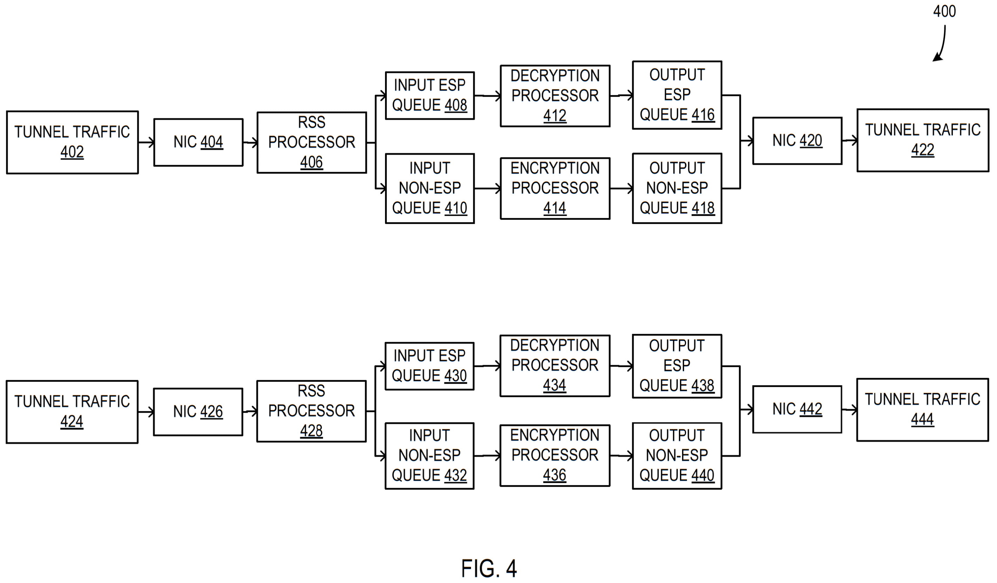

FIG. 4 is a block diagram illustrating a system 400 for processing packets in a first network traffic tunnel carrying tunnel traffic 402 and processing packets in a second network traffic tunnel carrying tunnel traffic 424. In some examples, a system such as system 100 of FIG. 1 is included in system 400 as one or more of the multiple network traffic tunnels. Further, in some examples, the network traffic tunnels of system 400 are configured to perform methods such as methods 200 and 300 of FIGs. 2 and 3, respectively.

The first network traffic tunnel is configured to receive tunnel traffic 402 and to perform encryption and decryption processing on the packets of the tunnel traffic 402. The tunnel traffic 402 is sent to an NIC 404 which enables the tunnel traffic 402 to enter the tunnel from the associated network connection(s). An RSS processor 406 distributes the packets of the tunnel traffic 402 between input ESP queue 408 and input non-ESP queue 410. The packets on the input ESP queue 408 are dequeued and decrypted by the decryption processor 412. The packets on the input non-ESP queue 410 are dequeued and encrypted by the encryption processor 414.

Once processed, the packets are added to output ESP queue 416 and output non-ESP queue 418 associated with the decryption processor 412 and the encryption processor 414, respectively. As described herein, the output queues 416 and 418 enable the use of packet order information to maintain the proper order of the packets of the tunnel traffic 402, even if the parallel packet processing causes the packets to be processed out of order. Packets from both output queues 416 and 418 are combined into a single packet flow or stream, which is provided to the NIC 420 to enable it to be passed on as tunnel traffic 422. In some examples, the NIC 404 and NIC 420 are the same device, while in other examples, the NIC 404 and NIC 420 are different devices.

The second network traffic tunnel is configured to receive tunnel traffic 424 and to perform packet processing on the packets of the tunnel traffic 424. The tunnel traffic 424 is sent to a NIC 426 which enables the tunnel traffic 424 to enter the tunnel from the associated network connection(s). An RSS processor 428 distributes the packets of the tunnel traffic 424 between input ESP queue 430 and input non-ESP queue 432. The packets on the input queues 430 and 432 are dequeued and processed by decryption processor 434 and encryption processor 436, wherein all packets dequeued from the input ESP queue 430 are processed by the decryption processor 434 and all packets dequeued from the input non-ESP queue 432 are processed by the encryption processor 436.

Once processed, the packets are added to output ESP queue 438 and output non-ESP queue 440 associated with the decryption processor 434 and encryption processor 436, respectively. As described herein, the output queues 438 and 440 enable the use of packet order information to maintain the proper order of the packets of the tunnel traffic 424, even if the parallel packet processing causes the packets to be processed out of order. Packets from both output queues 438 and 440 are combined into a single packet flow or stream, which is provided to the NIC 442 to enable it to be passed on as tunnel traffic 444. In some examples, the NIC 426 and NIC 442 are the same device, while in other examples, the NIC 426 and NIC 442 are different devices.

It should be understood that, in some examples, the two illustrated network traffic tunnels are configured to operate substantially simultaneously and/or in parallel. In some such examples, each network traffic tunnel is configured to include multiple dedicated CPU cores and/or CPUs configured to perform RSS processing, decryption processing, and/or encryption processing.

### Exemplary Operating Environment

The present disclosure is operable with a computing apparatus according to an embodiment as a functional block diagram 500 in FIG. 5. In an example, components of a computing apparatus 518 are implemented as a part of an electronic device according to one or more embodiments described in this specification. The computing apparatus 518 comprises one or more processors 519 which may be microprocessors, controllers, or any other suitable type of processors for processing computer executable instructions to control the operation of the electronic device. Alternatively, or in addition, the processor 519 is any technology capable of executing logic or instructions, such as a hard-coded machine. In some examples, platform software comprising an operating system 520 or any other suitable platform software is provided on the apparatus 518 to enable application software 521 to be executed on the device. In some examples, performing network packet processing in parallel using multiple dedicated processors as described herein is accomplished by software, hardware, and/or firmware.

In some examples, computer executable instructions are provided using any computer-readable media that is accessible by the computing apparatus 518. Computer-readable media include, for example, computer storage media such as a memory 522 and communications media. Computer storage media, such as a memory 522, include volatile and non-volatile, removable, and non-removable media implemented in any method or technology for storage of information such as computer readable instructions, data structures, program modules or the like. Computer storage media include, but are not limited to, Random Access Memory (RAM), Read-Only Memory (ROM), Erasable Programmable Read-Only Memory (EPROM), Electrically Erasable Programmable Read-Only Memory (EEPROM), persistent memory, phase change memory, flash memory or other memory technology, Compact Disk Read-Only Memory (CD-ROM), digital versatile disks (DVD) or other optical storage, magnetic cassettes, magnetic tape, magnetic disk storage, shingled disk storage or other magnetic storage devices, or any other non-transmission medium that can be used to store information for access by a computing apparatus. In contrast, communication media may embody computer readable instructions, data structures, program modules, or the like in a modulated data signal, such as a carrier wave, or other transport mechanism. As defined herein, computer storage media does not include communication media. Therefore, a computer storage medium is not a propagating signal. Propagated signals are not examples of computer storage media. Although the computer storage medium (the memory 522) is shown within the computing apparatus 518, it will be appreciated by a person skilled in the art, that, in some examples, the storage is distributed or located remotely and accessed via a network or other communication link (e.g., using a communication interface 523).

Further, in some examples, the computing apparatus 518 comprises an input/output controller 524 configured to output information to one or more output devices 525, for example a display or a speaker, which are separate from or integral to the electronic device. Additionally, or alternatively, the input/output controller 524 is configured to receive and process an input from one or more input devices 526, for example, a keyboard, a microphone, or a touchpad. In one example, the output device 525 also acts as the input device. An example of such a device is a touch sensitive display. The input/output controller 524 may also output data to devices other than the output device, e.g., a locally connected printing device. In some examples, a user provides input to the input device(s) 526 and/or receives output from the output device(s) 525.

The functionality described herein can be performed, at least in part, by one or more hardware logic components. According to an embodiment, the computing apparatus 518 is configured by the program code when executed by the processor 519 to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Program-specific Standard Products (ASSPs), System-on-a-chip systems (SOCs), Complex Programmable Logic Devices (CPLDs), Graphics Processing Units (GPUs).

At least a portion of the functionality of the various elements in the figures may be performed by other elements in the figures, or an entity (e.g., processor, web service, server, application program, computing device, or the like) not shown in the figures.

Although described in connection with an exemplary computing system environment, examples of the disclosure are capable of implementation with numerous other general purpose or special purpose computing system environments, configurations, or devices.

Examples of well-known computing systems, environments, and/or configurations that are suitable for use with aspects of the disclosure include, but are not limited to, mobile or portable computing devices (e.g., smartphones), personal computers, server computers, hand-held (e.g., tablet) or laptop devices, multiprocessor systems, gaming consoles or controllers, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, and the like. In general, the disclosure is operable with any device with processing capability such that it can execute instructions such as those described herein. Such systems or devices accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions, or the specific components or modules illustrated in the figures and described herein. Other examples of the disclosure include different computer-executable instructions or components having more or less functionality than illustrated and described herein.

In examples involving a general-purpose computer, aspects of the disclosure transform the general-purpose computer into a special-purpose computing device when configured to execute the instructions described herein.

An example system comprises a processor; and a memory comprising computer program code, the memory and the computer program code configured to cause the processor to: obtain a group of packets from a network traffic tunnel; add a first subgroup of packets of the group of packets to a first input queue; add a second subgroup of packets of the group of packets to a second input queue; process the first subgroup of packets using a first cryptographic processor; process the second subgroup of packets using a second cryptographic processor, wherein the first cryptographic processor and second cryptographic processor process packets in parallel; add processed packets from the first cryptographic processor to a first output queue with associated packet order information; add processed packets from the second cryptographic processor to a second output queue with associated packet order information; combine processed packets from the first output queue and processed packets from the second output queue into processed network traffic using the associated packet order information; and send the processed network traffic along the network traffic tunnel.

An example computerized method comprises obtaining a group of packets from a network traffic tunnel; adding a first subgroup of packets of the group of packets to a first input queue; adding a second subgroup of packets of the group of packets to a second input queue; processing the first subgroup of packets using a first packet processor; processing the second subgroup of packets using a second packet processor, wherein the first packet processor and second packet processor process packets in parallel; adding processed packets from the first packet processor to a first output queue with associated packet order information; adding processed packets from the second packet processor to a second output queue with associated packet order information; combining processed packets from the first output queue and processed packets from the second output queue into processed network traffic using the associated packet order information; and sending the processed network traffic along the network traffic tunnel.

One or more computer storage media having computer-executable instructions that, upon execution by a processor, case the processor to at least: obtain a group of packets from a network traffic tunnel; divide the obtained group of packets into a plurality of packet subgroups; distribute the plurality of packet subgroups to a plurality of input queues; transfer packets from the plurality of input queues to a plurality of packet processors, wherein each packet processor is dedicated to one input queue of the plurality of input queues; process the transferred packets using the plurality of packet processors; transfer processed packets from the plurality of packet processors to a plurality of output queues, wherein each packet processor is dedicated to one output queue of the plurality of output queues; combine the transferred processed packets from the plurality of output queues into processed network traffic using associated packet order information; and send the processed network traffic along the network traffic tunnel.

Alternatively, or in addition to the other examples described herein, examples include any combination of the following:
- wherein processing the first subgroup of packets using the first packet processor and processing the second subgroup of packets using the second packet processor includes at least one of data encryption or data decryption.
- further comprising using a plurality of worker threads to manage the first input queue, the second input queue, the first packet processor, the second packet processor, the first output queue, and the second output queue, wherein at least a portion of the plurality of worker threads perform management tasks in parallel with each other.
- wherein the network traffic tunnel is associated with network traffic to be decrypted and processing the group of packets includes decrypting the group of packets using the first packet processor and the second packet processor; and wherein another network traffic tunnel associated with network traffic to be encrypted includes another group of packet processors that are used to encrypt packets of the other network traffic tunnel.
- wherein the first input queue and the second input queue are first in first out (FIFO) data structures and the first output queue and the second output queue are circular data structures; and wherein packet order information includes an indicator of a location in at least one of the first output queue or the second output queue, wherein the indicator of the location is used to add processed packets to an associated output queue in order.
- wherein adding the first subgroup of packets to the first input queue and adding the second subgroup of packets to the second input queue are performed using receive side scaling (RSS).
- wherein the network traffic tunnel includes a dedicated network interface controller (NIC); and wherein the first packet processor and the second packet processor include a plurality of dedicated central processing units (CPUs).

Any range or device value given herein may be extended or altered without losing the effect sought, as will be apparent to the skilled person.

Examples have been described with reference to data monitored and/or collected from the users (e.g., user identity data with respect to profiles). In some examples, notice is provided to the users of the collection of the data (e.g., via a dialog box or preference setting) and users are given the opportunity to give or deny consent for the monitoring and/or collection. The consent takes the form of opt-in consent or opt-out consent.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The embodiments illustrated and described herein as well as embodiments not specifically described herein but within the scope of aspects of the claims constitute an exemplary means for obtaining a group of packets from a network traffic tunnel; an exemplary means for adding a first subgroup of packets of the group of packets to a first input queue; an exemplary means for adding a second subgroup of packets of the group of packets to a second input queue; an exemplary means for processing the first subgroup of packets using a first packet processor; an exemplary means for processing the second subgroup of packets using a second packet processor, wherein the first packet processor and second packet processor process packets in parallel; an exemplary means for adding processed packets from the first packet processor to a first output queue with associated packet order information; an exemplary means for adding processed packets from the second packet processor to a second output queue with associated packet order information; an exemplary means for combining processed packets from the first output queue and processed packets from the second output queue into processed network traffic using the associated packet order information; and an exemplary means for sending the processed network traffic along the network traffic tunnel.

The term "comprising" is used in this specification to mean including the feature(s) or act(s) followed thereafter, without excluding the presence of one or more additional features or acts.

In some examples, the operations illustrated in the figures are implemented as software instructions encoded on a computer readable medium, in hardware programmed or designed to perform the operations, or both. For example, aspects of the disclosure are implemented as a system on a chip or other circuitry including a plurality of interconnected, electrically conductive elements.

The order of execution or performance of the operations in examples of the disclosure illustrated and described herein is not essential, unless otherwise specified. That is, the operations may be performed in any order, unless otherwise specified, and examples of the disclosure may include additional or fewer operations than those disclosed herein. For example, it is contemplated that executing or performing a particular operation before, contemporaneously with, or after another operation is within the scope of aspects of the disclosure.

When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

## Claims

1. A system comprising:
a processor; and
a memory comprising computer program code, the memory and the computer program code configured to cause the processor to:
add a first subgroup of packets of a group of packets from a network traffic tunnel to a first input queue;
add a second subgroup of packets of the group of packets to a second input queue;
process the first subgroup of packets using a first cryptographic processor;
process the second subgroup of packets using a second cryptographic processor, wherein the first cryptographic processor and second cryptographic processor process packets in parallel;
add processed packets from the first cryptographic processor to a first output queue using first packet order information associated with the first subgroup of packets;
add processed packets from the second cryptographic processor to a second output queue using second packet order information associated with the second subgroup of packets;
combine the processed packets from the first output queue and the processed packets from the second output queue into processed network traffic using the first packet order information and the second packet order information; and
send the processed network traffic along the network traffic tunnel.

2. The system of claim 1, wherein processing the first subgroup of packets using the first cryptographic processor and processing the second subgroup of packets using the second cryptographic processor includes at least one of data encryption or data decryption.

3. The system of claim 1 or 2, wherein the memory and the computer program code are configured to further cause the processor to use a plurality of worker threads to manage the first input queue, the second input queue, the first cryptographic processor, the second cryptographic processor, the first output queue, and the second output queue, wherein at least a portion of the plurality of worker threads perform management tasks in parallel with each other.

4. The system of one of claims 1 to 3, wherein the network traffic tunnel is associated with network traffic to be decrypted and processing the group of packets includes decrypting the first subgroup of packets using the first cryptographic processor and decrypting the second subgroup of packets using the second cryptographic processor; and
wherein another network traffic tunnel associated with network traffic to be encrypted includes another group of cryptographic processors that are used to encrypt packets of the other network traffic tunnel.

5. The system of one of claims 1 to 4, wherein the first input queue and the second input queue are first in first out (FIFO) data structures and the first output queue and the second output queue are circular data structures; and
wherein the first packet order information and the second packet order information include an indicator of a location in at least one of the first output queue or the second output queue, wherein the indicator indicates the location of the processed packets in an associated output queue in order.

6. The system of one of claims 1 to 5, wherein adding the first subgroup of packets to the first input queue and adding the second subgroup of packets to the second input queue are performed using receive side scaling (RSS).

7. The system of one of claims 1 to 6, wherein the network traffic tunnel includes a dedicated network interface controller (NIC); and
wherein the first cryptographic processor and the second cryptographic processor include a plurality of dedicated central processing unit (CPU) cores.

8. A computerized method comprising:
adding a first subgroup of packets of a group of packets from a network traffic tunnel to a first input queue;
adding a second subgroup of packets of the group of packets to a second input queue;
processing the first subgroup of packets using a first packet processor;
processing the second subgroup of packets using a second packet processor, wherein the first packet processor and second packet processor process packets in parallel;
adding processed packets from the first packet processor to a first output queue using first packet order information associated with the first subgroup of packets;
adding processed packets from the second packet processor to a second output queue using second packet order information associated with the second subgroup of packets;
combining the processed packets from the first output queue and the processed packets from the second output queue into processed network traffic using the first packet order information and the second packet order information; and
sending the processed network traffic along the network traffic tunnel.

9. The computerized method of claim 8, at least one of:
wherein processing the first subgroup of packets using the first packet processor and processing the second subgroup of packets using the second packet processor includes at least one of data encryption or data decryption; and
further comprising using a plurality of worker threads to manage the first input queue, the second input queue, the first packet processor, the second packet processor, the first output queue, and the second output queue, wherein at least a portion of the plurality of worker threads perform management tasks in parallel with each other.

10. The computerized method of claim 8 or 9, wherein the network traffic tunnel is associated with network traffic to be decrypted and processing the group of packets includes decrypting the first subgroup of packets using the first packet processor and decrypting the second subgroup of packets using the second packet processor; and
wherein another network traffic tunnel associated with network traffic to be encrypted includes another group of packet processors that are used to encrypt packets of the other network traffic tunnel.

11. The computerized method of one of claims 8 to 10, wherein the first input queue and the second input queue are first in first out (FIFO) data structures and the first output queue and the second output queue are circular data structures; and
wherein the first packet order information and the second packet order information include an indicator of a location in at least one of the first output queue or the second output queue, wherein the indicator indicates the location of the processed packets in an associated output queue in order.

12. The computerized method of one of claims 8 to 11, at least one of:
wherein adding the first subgroup of packets to the first input queue and adding the second subgroup of packets to the second input queue are performed using receive side scaling (RSS); and
wherein the network traffic tunnel includes a dedicated network interface controller (NIC); and
wherein the first packet processor and the second packet processor include a plurality of dedicated central processing units (CPUs).

13. A computer storage medium has computer-executable instructions that, upon execution by a processor, cause the processor to at least:
obtain a group of packets from a network traffic tunnel;
divide the obtained group of packets into a plurality of packet subgroups;
distribute the plurality of packet subgroups to a plurality of input queues;
transfer packets from the plurality of input queues to a plurality of packet processors, wherein each packet processor is dedicated to one input queue of the plurality of input queues;
process the transferred packets using the plurality of packet processors;
transfer the processed packets from the plurality of packet processors to a plurality of output queues, wherein each packet processor is dedicated to one output queue of the plurality of output queues;
combine the transferred processed packets from the plurality of output queues into processed network traffic using associated packet order information; and
send the processed network traffic along the network traffic tunnel.

14. The computer storage medium of claim 13, wherein processing the transferred packets using the plurality of packet processors includes at least one of data encryption or data decryption.

15. The computer storage medium of claim 13 or 14, at least one of:
wherein the computer-executable instructions, upon execution by a processor, further cause the processor to at least use a plurality of worker threads to manage the plurality of input queues, the plurality of packet processors, and the plurality of output queues, wherein at least a portion of the plurality of worker threads perform management tasks in parallel with each other;
wherein the network traffic tunnel is associated with network traffic to be decrypted and processing the group of packets includes decrypting the group of packets using the plurality of packet processors; and
wherein another network traffic tunnel associated with network traffic to be encrypted includes another plurality of packet processors that are used to encrypt packets of the other network traffic tunnel;
wherein the plurality of input queues are first in first out (FIFO) data structures and the plurality of output queues are circular data structures; and
wherein packet order information includes an indicator of a location in at least one of the plurality of output queues, wherein the indicator indicates the location of a processed packet in an associated output queue in order; and
wherein the network traffic tunnel includes a dedicated network interface controller (NIC); and
wherein the plurality of packet processors includes a plurality of dedicated central processing units (CPUs).
